# EUROPÄISCHE PATENTSCHRIFT

(11) **EP 2 956 331 B1**
(45) Veröffentlichungstag und Bekanntmachung des Hinweises auf die Patenterteilung: **15.05.2019**
(21) Anmeldenummer: 14703829.3
(22) Anmeldetag: 10.02.2014
(51) Int. Cl.: B60N 2/015, B60N 2/36, B60N 2/68

(54) **FAHRZEUGSITZ MIT VERRIEGELUNGSEINHEIT**
VEHICLE SEAT WITH LOCKING UNIT
SIÈGE DE VÉHICULE AVEC UNITÉ DE VERROUILLAGE

(30) Priorität: 15.02.2013 DE 102013002820
(43) Veröffentlichungstag der Anmeldung: 23.12.2015
(73) Patentinhaber: Adient Luxembourg Holding S.à r.l., 1855 Luxembourg (LU)
(72) Erfinder: HANDL, Patrick, 50739 Köln (DE); VEDDER, Andreas, 42781 Haan (DE); MOELLER, Uwe, 42697 Solingen (DE); GORDEENKO, Igor, 50226 Frechen (DE); DEMIRCI, Oezkan, 44795 Bochum (DE); POHLSCHEIDT, Dennis, 53844 Troisdorf (DE); CHRISTALL, Martin, 42659 Solingen (DE)
(74) Vertreter: Liedhegener, Ralf
(86) Internationale Anmeldenummer: PCT/EP2014/052505
(87) Internationale Veröffentlichungsnummer: WO 2014/124887

(56) Entgegenhaltungen:
- WO-A2-2004/069580
- FR-A1- 2 760 778

## Beschreibung

Die Erfindung betrifft einen Fahrzeugsitz mit einer Verriegelungseinheit mit den Merkmalen des Oberbegriffs des Anspruchs 1.

### Stand der Technik

Aus der DE 10 2008 051 832 A1 ist eine Verriegelungseinheit für einen Fahrzeugsitz bekannt. Eine derartige Verriegelungseinheit umfasst eine schwenkbar gelagerte Drehfalle zum Verriegeln mit einem Bolzen. Eine um eine andere Schwenkachse schwenkbar gelagerte Rastklinke sichert die Drehfalle im verriegelten Zustand. Ein als Toleranzausgleichsklinke bezeichnetes Spannelement übt auf die Drehfalle ein schließendes Moment aus und eliminiert auf diese Art zwischen der Drehfalle und dem Bolzen vorhandenes Spiel.

Aus der DE 20 2011 100 040 U1 ist ebenfalls eine Verriegelungseinheit für einen Fahrzeugsitz bekannt. Die Drehfalle dieser Verriegelungseinheit weist eine von der Kreisform abweichende, annähernd langlochförmige Ausnehmung auf, mittels welcher sie auf einer Buchse oder einem Lagerbolzen schwenkbar gelagert ist.

Derartige Verriegelungseinheiten dienen beispielsweise zur Verriegelung einer Rückenlehne eines Fahrzeugsitzes an einem Sitzteil und/oder an einer Karosserie oder Struktur eines Fahrzeugs oder zur Verriegelung des Fahrzeugsitzes an der Karosserie oder Struktur des Fahrzeugs. Auch Motorhauben, Heckklappen oder Türen von Fahrzeugen lassen sich mit solchen Verriegelungseinheiten mit der Karosserie oder Struktur des Fahrzeugs verriegeln.

Aus der DE 10 2008 033 304 A1 ist ein gattungsgemäßer Fahrzeugsitz mit einer Verriegelungseinheit bekannt. Die Verriegelungseinheit ist dabei an einem Strukturteil, insbesondere einer Rückenlehne des Fahrzeugsitzes befestigt und dient zur Verriegelung der Rückenlehne mit einer Struktur des Fahrzeugs, beziehungsweise dessen Karosserie. Dazu weist die Verriegelungseinheit eine als Klinke bezeichnete Drehfalle auf, welche im verriegelten Zustand der Verriegelungseinheit einen an der Struktur des Fahrzeugs befestigten Verriegelungsbolzen umgreift.

Die Verriegelungseinheit weist zwei Lagerbolzen auf, welche der schwenkbaren Lagerung der Drehfalle sowie von zwei Sicherungselementen, welche zur Sicherung der Drehfalle im verriegelten Zustand vorgesehen sind, dienen. Die beiden Lagerbolzen dienen auch der Befestigung der Verriegelungseinheit an dem Strukturteil des Fahrzeugsitzes und sind annähernd hohlzylindrisch ausgebildet. Zur Befestigung der Verriegelungseinheit an dem Strukturteil des Fahrzeugsitzes sind ferner zwei Schrauben vorgesehen, welche je einen der beiden Lagerbolzen durchgreifen und in das Strukturteil oder eine zusätzliche Mutter eingeschraubt sind.

Aus der FR 2 760 778 A1 ist beispielsweise eine Verriegelungseinheit eines Türschlosses bekannt, welche an einem Blechabschnitt einer Fahrzeugtür anordenbar ist.

Aus der WO 2004/069580 A2 ist weiter eine Verriegelungsvorrichtung für einen Fahrzeugsitz bekannt, welche ein offenes Gehäuse, eine schwenkbar am Gehäuse gelagerte Klinke zum Verriegeln mit einem Gegenelement und wenigstens ein ebenfalls schwenkbar am Gehäuse gelagertes Sicherungselement aufweist. Das Sicherungselement sichert durch Zusammenwirken mit der Klinke einen verriegelten Zustand. Die Verriegelungsvorrichtung ist an einem Strukturteil anbringbar, wobei das Strukturteil den Deckel zum weitgehenden Schließen des Gehäuses bildet.

### Aufgabe

Der Erfindung liegt die Aufgabe zu Grunde, einen Fahrzeugsitz mit einer Verriegelungseinheit der eingangs genannten Art zu verbessern, insbesondere die Festigkeit und Belastbarkeit der Verbindung zwischen dem Strukturteil und der Verriegelungseinheit zu erhöhen.

### Lösung

Diese Aufgabe wird erfindungsgemäß durch einen Fahrzeugsitz mit den Merkmalen des Anspruches 1 gelöst.

Vorteilhafte Ausgestaltungen, welche einzeln oder in Kombination miteinander eingesetzt werden können, sind Gegenstand der Unteransprüche.

Ein gattungsgemäßer Fahrzeugsitz umfasst ein Strukturteil, insbesondere eine Rückenlehne, welches ein Schlossanbindungsblech aufweist, und eine an dem Schlossanbindungsblech befestigte Verriegelungseinheit, wobei die Verriegelungseinheit mindestens einen Lagerbolzen mit einer Durchgangsöffnung aufweist.

Erfindungsgemäß weist das Schlossanbindungsblech dabei mindestens eine Gegenkontur auf, welche in die Durchgangsöffnung des mindestens einen Lagerbolzens hinein ragt, und die Gegenkontur hohlzylindrisch ausgebildet ist.

Dadurch übernimmt auch die Gegenkontur Belastungen, die auf die Verriegelungseinheit wirken, insbesondere im Crashfall auftretende Scherspannungen. Somit ist die Lastaufnahmefähigkeit der Verbindung zwischen dem Strukturteil und der Verriegelungseinheit erhöht. Ferner ist die Montage der Verriegelungseinheit an dem Schlossanbindungsblech vereinfacht, da die Gegenkontur eine Führung für den Lagerbolzen darstellt.

Vorzugsweise weist die Durchgangsöffnung einen ersten axialen Abschnitt mit einem ersten Innendurchmesser und einen zweiten axialen Abschnitt mit einem zweiten Innendurchmesser auf, wobei der zweite Innendurchmesser größer ist als der erste Innendurchmesser. Der zweite axiale Abschnitt bildet somit einen Aufnahmeraum für die Gegenkontur im Inneren des ersten Lagerbolzens.

Dabei ist der zweite axiale Abschnitt vorteilhaft dem Schlossanbindungsblech zugewandt um die Gegenkontur aufzunehmen.

Wenn der äußere Durchmesser der Gegenkontur dem zweiten Innendurchmesser der Durchgangsöffnung entspricht, ist die Verriegelungseinheit in radialer Richtung formschlüssig an dem Schlossanbindungsblech festgelegt, wodurch die Montage weiter vereinfacht wird.

Wenn die Länge der Gegenkontur in axialer Richtung der Länge des zweiten axialen Abschnitts entspricht, so füllt die Gegenkontur den zweiten axialen Abschnitt zumindest annähernd vollständig aus, wodurch die Lastaufnahmefähigkeit der Verbindung weiter erhöht ist.

Vorzugsweise entspricht der innere Durchmesser der Gegenkontur dem ersten Innendurchmesser des ersten axialen Abschnitts der Durchgangsöffnung.

Gemäß einer vorteilhaften Ausgestaltung der Erfindung ist die Gegenkontur als Kragenzug ausgebildet. Ein solcher Kragenzug ist verhältnismäßig einfach herzustellen und ist einstückig mit dem Schlossanbindungsblech ausgeführt, wodurch ein separates Bauteil eingespart wird.

Zur Befestigung der Verriegelungseinheit an dem Strukturteil ist vorzugsweise ein Befestigungsmittel vorgesehen, das die Durchgangsöffnung durchragt.

Das Befestigungsmittel ist vorteilhaft als Schraube mit einem Kopf und einem Schaft ausgebildet, wodurch eine verhältnismäßig einfache Montage der Verriegelungseinheit an dem Schlossanbindungsblech möglich ist.

Gemäß einer vorteilhaften Weiterbildung der Erfindung weist die Gegenkontur ein Innengewinde auf, in welches die Schraube eingeschraubt ist. Dadurch wird ein separates Bauteil eingespart.

Gemäß einer alternativen Ausgestaltung ist auf der der Verriegelungseinheit abgewandten Seite des Schlossanbindungsblechs eine Mutter vorgesehen, in welche die Schraube eingeschraubt ist.

Das Befestigungsmittel ist gemäß einer anderen Ausgestaltung als Niet ausgebildet. Auch dadurch ist eine verhältnismäßig einfache Montage der Verriegelungseinheit an dem Schlossanbindungsblech möglich.

Das Strukturteil des Fahrzeugsitzes ist beispielsweise eine Rückenlehne.

Der Lagerbolzen dient vorteilhaft auch zur schwenkbaren Lagerung einer Drehfalle, welche mit einem Verriegelungsbolzen zusammenwirkt.

Die Verrieglungseinheit weist vorzugsweise mindestens einen weiteren Lagerbolzen auf, auf welchem mindestens ein Sicherungselement, insbesondere ein Spannelement oder eine Rastklinke, schwenkbar gelagert ist.

### Figuren und Ausführungsformen der Erfindung

Im Folgenden ist die Erfindung anhand von einem in den Figuren dargestellten vorteilhaften Ausführungsbeispiel näher erläutert. Die Erfindung ist jedoch nicht auf dieses Ausführungsbeispiel beschränkt. Es zeigen:

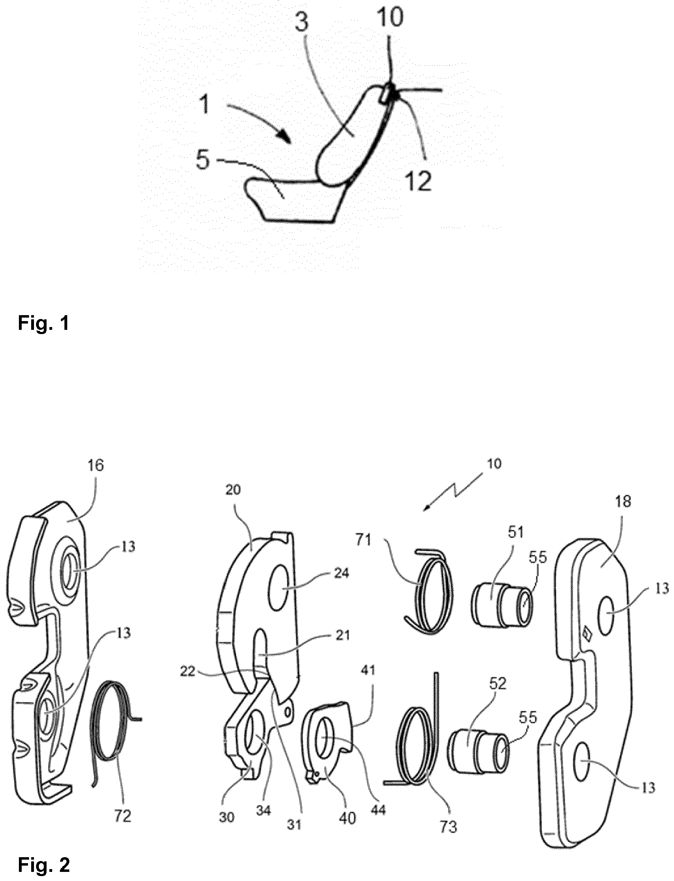

- Fig. 1:: eine schematisierte Darstellung eines Fahrzeugsitzes,
- Fig. 2:: eine Explosionsdarstellung einer Verriegelungseinheit,

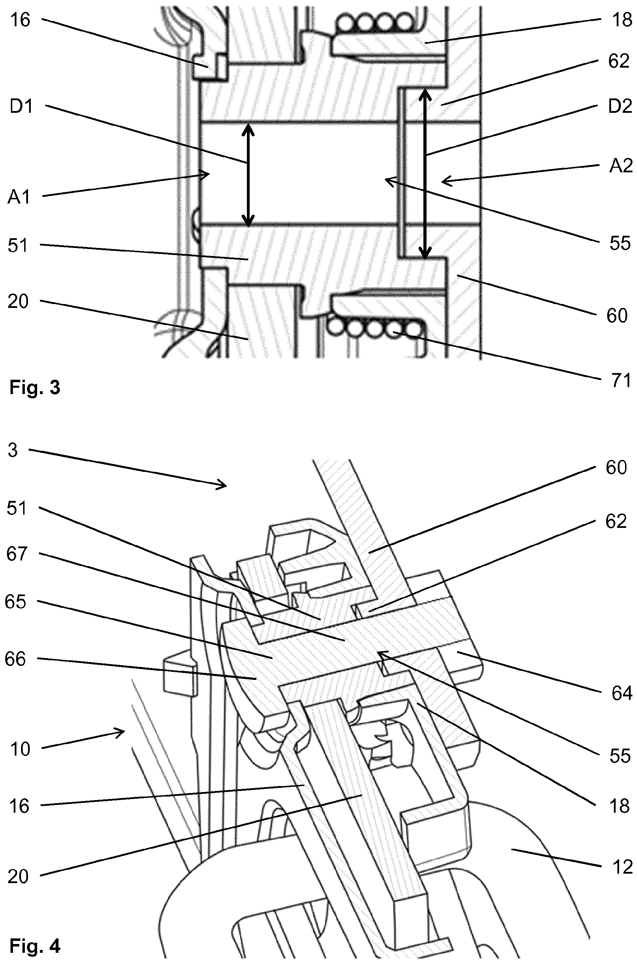

- Fig. 3:: einen Schnitt durch einen Lagerbolzen der Verriegelungseinheit nach Fig. 2 und
- Fig. 4:: eine perspektivische Darstellung eines Schnitts durch einen Lagerbolzen der Verriegelungseinheit und eine Rückenlehne.

In einem Kraftfahrzeug ist eine Verriegelungseinheit 10 zur Anbindung eines Strukturteils, vorliegend einer Rückenlehne 3, eines Fahrzeugsitzes 1, insbesondere eines Rücksitzes, an einer Fahrzeugstruktur vorgesehen. Die Rückenlehne 3 ist dabei von einer Gebrauchsstellung in eine Nichtgebrauchsstellung schwenkbar an einem Sitzteil 5 angebracht.

Die Verriegelungseinheit 10 ist auch an anderen Stellen einsetzbar, beispielsweise zur Befestigung des Sitzteils 5 des Fahrzeugsitzes 1 an der Bodenstruktur des Kraftfahrzeugs oder in einem Türschloss.

Die Anordnung des Fahrzeugsitzes 1 innerhalb des Fahrzeugs und dessen gewöhnliche Fahrtrichtung definieren die im Folgenden verwendeten Richtungsangaben. Dabei wird eine senkrecht zum Erdboden orientierte Richtung im Folgenden als Vertikalrichtung bezeichnet und eine Richtung senkrecht zur Vertikalrichtung und senkrecht zur Fahrtrichtung wird im Folgenden als Querrichtung bezeichnet.

Die Verriegelungseinheit 10 weist ein Schlossgehäuse auf, welches eine erste Seitenplatte 16 und eine zweite Seitenplatte 18 umfasst. Die Grundflächen der Seitenplatten 16, 18 sind vorliegend flach ausgestaltet und in einer durch die Fahrtrichtung und die Vertikalrichtung definierten Ebene angeordnet, also senkrecht zur Querrichtung. Jede der Seitenplatten 16, 18 umfasst zwei vorliegend kreisrund ausgeführte Lagerbohrungen 13.

Die erste Seitenplatte 16 und die zweite Seitenplatte 18 bilden eine Aufnahme aus, welche sich in Richtung eines Verriegelungsbolzens 12 öffnet, um diesen zum Verriegeln aufzunehmen. Dabei ist die Verriegelungseinheit 10 vorliegend an der Rückenlehne 3 und der Verriegelungsbolzen 12 an der Fahrzeugstruktur befestigt. Es ist auch denkbar, dass die Verriegelungseinheit 10 an der Fahrzeugstruktur und der Verriegelungsbolzen 12 an der Rückenlehne 3 befestigt ist. Der von der Aufnahme aufzunehmende Abschnitt des Verriegelungsbolzens 12 verläuft in der Regel horizontal in Querrichtung.

Eine Drehfalle 20 ist auf einem ersten Lagerbolzen 51 schwenkbar gelagert, welcher wiederum an der ersten Seitenplatte 16 und an der zweiten Seitenplatte 18 befestigt ist. Die Drehfalle 20 weist dazu ein Drehfallenloch 24 auf, welches vorliegend als kreisrunde Öffnung ausgebildet ist, und welches von dem ersten Lagerbolzen 51 durchdrungen ist. Die Drehfalle 20 weist ferner zum Zusammenwirken mit dem Verriegelungsbolzen 12 ein Hakenmaul 21 auf. Mittels einer ersten Feder 71 ist die Drehfalle 20 in Öffnungsrichtung vorgespannt.

Die Drehfalle 20 weist eine Funktionsfläche 22 auf, welche das Hakenmaul 21 teilweise seitlich begrenzt. Im verriegelten Zustand weist die Funktionsfläche 22 näherungsweise in Richtung eines zweiten Lagerbolzens 52, welcher parallel zu dem ersten Lagerbolzen 51 angeordnet ist und somit ebenfalls in Querrichtung verläuft. Die Funktionsfläche 22 ist vorliegend eben ausgebildet, kann aber beispielsweise auch kreisbogenförmig gekrümmt und konvex oder konkav ausgebildet sein.

Auf der dem Drehfallenloch 24 abgewandten Seite des Hakenmauls 21, der Funktionsfläche 22 gegenüber liegend, ist das Hakenmaul 21 von einer Nase der Drehfalle 20 seitlich begrenzt.

Die Drehfalle 20 weist einen Grundkörper auf, welcher in axialer Richtung von je einer flachen Grundfläche begrenzt ist. Die Breite der Funktionsfläche 22 entspricht der Dicke des Grundkörpers der Drehfalle 20, also der Ausdehnung des Grundkörpers in axialer Richtung.

Der erste Lagerbolzen 51 ist in je eine Lagerbohrung 13 der Seitenplatten 16, 18 eingesetzt und steht von den Grundflächen der Seitenplatten 16, 18 senkrecht ab. Der erste Lagerbolzen 51 verläuft somit horizontal in Querrichtung. Vorliegend ist der vorzugsweise metallische erste Lagerbolzen 51 mit den Seitenplatten 16, 18 vernietet oder verstemmt.

Auch der zweite Lagerbolzen 52 ist in je eine Lagerbohrung 13 der Seitenplatten 16, 18 eingesetzt und steht von den Grundflächen der Seitenplatten 16, 18 senkrecht ab. Der zweite Lagerbolzen 52 verläuft somit ebenfalls horizontal in Querrichtung. Vorliegend ist der vorzugsweise metallische zweite Lagerbolzen 52 mit den Seitenplatten 16, 18 vernietet oder verstemmt.

Die Verriegelungseinheit 10 ist vorliegend an einem Schlossanbindungsblech 60, welches ein Teil der Rückenlehne 3 ist, befestigt, vorliegend angeschraubt. Das Schlossanbindungsblech 60 ist weitgehend flach ausgestaltet und erstreckt sich in einer Ebene senkrecht zur Querrichtung. Dabei liegt die zweite Seitenplatte 18 der Verriegelungseinheit 10 an dem Schlossanbindungsblech 60 an, während die erste Seitenplatte 16 von dem Schlossanbindungsblech 60 abgewandt liegt.

Der erste Lagerbolzen 51 ist annähernd in Form eines Hohlzylinders ausgebildet und weist eine in axialer Richtung verlaufende Durchgangsöffnung 55 auf. In einem ersten axialen Abschnitt A1 weist die Durchgangsöffnung 55 einen ersten Innendurchmesser D1 auf. Der erste axiale Abschnitt A1 erstreckt sich, beginnend an der dem Schlossanbindungsblech 60 abgewandten ersten Seitenplatte 16, in axialer Richtung auf die zweite Seitenplatte 18 und das Schlossanbindungsblech 60 zu.

In einem zweiten axialen Abschnitt A2 weist die Durchgangsöffnung 55 des ersten Lagerbolzens 51 einen zweiten Innendurchmesser D2 auf. Der zweite Innendurchmesser D2 ist größer als der erste Innendurchmesser D1. Der zweite axiale Abschnitt A2 erstreckt sich, beginnend an der dem Schlossanbindungsblech 60 benachbarten zweiten Seitenplatte 18, in axialer Richtung auf die erste Seitenplatte 16 und auf den ersten axialen Abschnitt A1 zu.

Der erste axiale Abschnitt A1 ist in axialer Richtung länger als der zweite axiale Abschnitt A2. Der erste axiale Abschnitt A1 erstreckt sich vorliegend etwa über drei Viertel der axialen Ausdehnung des ersten Lagerbolzens 51, und der zweite axiale Abschnitt A2 erstreckt sich vorliegend etwa über ein Viertel der axialen Ausdehnung des ersten Lagerbolzens 51. Aber auch andere Relationen der Längen des ersten axialen Abschnitts A1 und des zweiten axialen Abschnitts A2 sind denkbar. Der zweite axiale Abschnitt A2 mit dem zweiten Durchmesser D2 bildet eine Stufe bezüglich des ersten axialen Abschnitts A1 mit dem ersten Durchmesser D1 im Inneren des ersten Lagerbolzens 51.

An dem Schlossanbindungsblech 60 ist auf der der Verriegelungseinheit 10 zugewandten Seite eine Gegenkontur 62 ausgebildet. Die Gegenkontur 62 ist vorliegend hohlzylindrisch ausgebildet. Der äußere Durchmesser der Gegenkontur 62 entspricht dem zweiten Durchmesser D2 des zweiten axialen Abschnitts A2 des ersten Lagerbolzens 51, und der innere Durchmesser der Gegenkontur 62 entspricht dem ersten Durchmesser D1 des ersten axialen Abschnitts A1 des ersten Lagerbolzens 51. Die Länge der Gegenkontur 62 in axialer Richtung entspricht der Länge des zweiten axialen Abschnitts A2.

Die Gegenkontur 62 des Schlossanbindungsblechs 60 ragt in den zweiten axialen Abschnitt A2 des ersten Lagerbolzens 51 hinein und füllt diesen dabei zumindest annähernd vollständig aus.

Die Gegenkontur 62 ist vorliegend als Kragenzug ausgebildet und somit einstückig mit dem Schlossanbindungsblech 60 ausgeführt.

Ein als Schraube 65 ausgebildetes Befestigungsmittel durchragt den ersten Lagerbolzen 51 in axialer Richtung. Dabei liegt ein Kopf 66 der Schraube 65 an der ersten Seitenplatte 16 der Verriegelungseinheit 10 an. Ein Schaft 67 der Schraube 65 durchgreift den ersten axialen Abschnitt A1 des ersten Lagerbolzens 51 und die daran anschließende Gegenkontur 62 des Schlossanbindungsblechs 60. Der Durchmesser des Schafts 67 der Schraube 65 entspricht annähernd dem ersten Durchmesser D1 des ersten axialen Abschnitts A1.

Auf der der Verriegelungseinheit 10 abgewandten Seite des Schlossanbindungsblechs 60 ist eine Mutter 64 mit einem Innengewinde vorgesehen, in welche ein Außengewinde des Schafts 67 der Schraube 65 eingeschraubt ist. Der Innendurchmesser der Mutter 64 entspricht dem Durchmesser des Schafts 67.

Die Mutter 64 ist vorliegend an der der Verriegelungseinheit 10 abgewandten Seite des Schlossanbindungsblechs 60 angeschweißt.

Alternativ kann die Mutter 64 auch entfallen, wobei die Gegenkontur 62 dann ein Innengewinde aufweist, dessen Durchmesser dem Durchmesser des Schafts 67 der Schraube 65 entspricht. Der Schaft 67 der Schraube 65 ist dann in das Innengewinde der Gegenkontur 62 eingeschraubt.

Der zweite Lagerbolzen 52 ist vorliegend identisch mit dem ersten Lagerbolzen 51 ausgebildet und wird ebenfalls von einem als Schraube 65 ausgebildeten Befestigungsmittel durchragt und ist an einer weiteren Gegenkontur 62 des Schlossanbindungsblechs 60 festgelegt.

Die Verriegelungseinheit 10 ist somit mittels zweier Schrauben 65 mit dem Schlossanbindungsblech 60 verbunden.

Auf dem zweiten Lagerbolzen 52 ist schwenkbar ein Spannelement 40 gelagert. Dazu weist das Spannelement 40 ein vorliegend kreisrundes Spannelementloch 44 auf, welches von dem zweiten Lagerbolzen 52 durchdrungen ist. Mittels einer dritten Feder 73 ist das Spannelement 40 zu der Drehfalle 20 hin vorgespannt.

Im verriegelten Zustand, wenn das Hakenmaul 21 der Drehfalle 20 den Verriegelungsbolzen 12 aufnimmt, übt das Spannelement 40 aufgrund der Vorspannung durch die dritte Feder 73 als Sicherungselement ein schließendes Moment auf die Drehfalle 20 aus. Dazu weist das Spannelement 40 eine exzentrisch zum zweiten Lagerbolzen 52 gekrümmte Spannfläche 41 auf, welche sich in nicht-selbsthemmendem Kontakt mit der Funktionsfläche 22 der Drehfalle 20 befindet. Die Spannfläche 41 ist vorliegend kreisbogenförmig gekrümmt und konvex ausgebildet.

Eine Rastklinke 30 ist auf dem zweiten Lagerbolzen 52 axial neben dem Spannelement 40 angeordnet und ebenfalls schwenkbar auf dem zweiten Lagerbolzen 52 gelagert, also mit dem Spannelement 40 fluchtend. Dazu weist die Rastklinke 30 ein vorliegend kreisrundes Rastklinkenloch 34 auf, welches von dem zweiten Lagerbolzen 52 durchdrungen ist. Mittels einer zweiten Feder 72 ist die Rastklinke 30 zu der Drehfalle 20 hin vorgespannt.

Die Rastklinke 30 ist vorliegend der ersten Seitenplatte 16 benachbart angeordnet und das Spannelement 40 ist vorliegend der zweiten Seitenplatte 18 benachbart angeordnet. Die Rastklinke 30 und das Spannelement 40 sind mit einem Leerweg auf Mitnahme gekoppelt, beispielsweise mittels einer Schlitz-Zapfen-Führung oder mittels eines axial abstehenden Mitnehmers.

Die Rastklinke 30 weist eine Rastfläche 31 auf, welche sich in Nachbarschaft zu der Spannfläche 41 des Spannelements 40 befindet. Im verriegelten Zustand ist die Rastfläche 31 beabstandet zu der Funktionsfläche 22 der Drehfalle 20 positioniert. Die Rastfläche 31 ist vorliegend kreisbogenförmig gekrümmt und konvex ausgebildet, kann aber auch eben sein.

Die Breite der Funktionsfläche 22, welche der Dicke des Grundkörpers der Drehfalle 20 entspricht, entspricht auch annähernd der Summe aus der Dicke der Rastklinke 30 und der Dicke des Spannelements 40. Die Drehfalle 20 weist also annähernd die gleiche Materialstärke auf wie die Rastklinke 30 und das Spannelement 40 zusammen.

Wenn im Crashfall die Drehfalle 20 ein öffnendes Moment erfährt und das Spannelement 40 etwas wegdrückt, gelangt die Rastfläche 31 in Anlage an die Funktionsfläche 22 der Drehfalle 20. So dient die Rastklinke 30 der Abstützung der Drehfalle 20 und verhindert als weiteres Sicherungselement eine weitere Drehung der Drehfalle 20 in Öffnungsrichtung. Damit verhindert die Rastklinke 30 ein Öffnen der Drehfalle 20.

Im verriegelten Zustand der Verriegelungseinheit 10 befindet sich der Verriegelungsbolzen 12 in der von den Seitenplatten 16, 18 gebildeten Aufnahme und im Hakenmaul 21 der geschlossenen Drehfalle 20. Das Spannelement 40 sichert durch Zusammenwirken der Spannfläche 41 mit der Funktionsfläche 22 die Drehfalle 20. Die Rastfläche 31 der Rastklinke 30 ist geringfügig von der Funktionsfläche 22 der Drehfalle 20 beabstandet.

Zum Öffnen der Verriegelungseinheit 10 wird die Rastklinke 30 von der Drehfalle 20 weg geschwenkt, wodurch sich die Rastfläche 31 der Rastklinke 30 weiter von der Funktionsfläche 22 der Drehfalle 20 entfernt. Die Rastklinke 30 nimmt das Spannelement 40 aufgrund der Mitnahmekopplung mit, so dass die Drehfalle 20 nicht länger gesichert ist.

Durch die Vorspannung aufgrund der ersten Feder 71 öffnet die Drehfalle 20, schwenkt also in Öffnungsrichtung. Alternativ oder zusätzlich zu der Vorspannung durch die erste Feder 71 kann die Drehfalle 20 zum Öffnen auch von der Rastklinke 30 oder von dem Spannelement 40 mitgenommen werden.

Aufgrund der Schwenkbewegung der Drehfalle 20 zieht sich das Hakenmaul 21 von der von den Seitenplatten 16, 18 gebildeten Aufnahme zurück und gibt den Verriegelungsbolzen 12 frei, welcher sich entgegen der Einschwenkrichtung von der Verriegelungseinheit 10 entfernt. Hat der Verriegelungsbolzen 12 das Hakenmaul 21 verlassen, so befindet sich die Verriegelungseinheit 10 im entriegelten Zustand.

Gelangt in diesem entriegelten Zustand der Verriegelungsbolzen 12 wieder in die von den Seitenplatten 16, 18 gebildete Aufnahme und in Anlage an den Rand des Hakenmauls 21, so drückt der Verriegelungsbolzen 12 die Drehfalle 20 in ihre geschlossene Stellung. Das Spannelement 40 bewegt sich aufgrund seiner Vorspannung durch die dritte Feder 73 entlang der Funktionsfläche 22. Von dem Spannelement 40 mitgenommen oder aufgrund der Vorspannung durch die zweite Feder 72 schwenkt die Rastklinke 30 auf die Drehfalle 20 zu, wobei sich die Rastfläche 31 der Funktionsfläche 22 der Drehfalle 20 nähert. Danach befindet sich die Verriegelungseinheit 10 wieder im verriegelten Zustand.

### Bezugszeichenliste

- 1: Fahrzeugsitz
- 3: Strukturteil, Rückenlehne
- 5: Sitzteil
- 10: Verriegelungseinheit
- 12: Verriegelungsbolzen
- 13: Lagerbohrung
- 16: erste Seitenplatte
- 18: zweite Seitenplatte
- 20: Drehfalle
- 21: Hakenmaul
- 22: Funktionsfläche
- 24: Drehfallenloch
- 30: Rastklinke
- 31: Rastfläche
- 34: Rastklinkenloch
- 40: Spannelement
- 41: Spannfläche
- 44: Spannelementloch
- 51: erster Lagerbolzen
- 52: zweiter Lagerbolzen
- 55: Durchgangsöffnung
- 60: Schlossanbindungsblech
- 62: Gegenkontur
- 64: Mutter
- 65: Befestigungsmittel, Schraube
- 66: Kopf
- 67: Schaft
- 71: erste Feder
- 72: zweite Feder
- 73: dritte Feder
- A1: erster axialer Abschnitt
- A2: zweiter axialer Abschnitt
- D1: erster Innendurchmesser
- D2: zweiter Innendurchmesser

## Patentansprüche

1. Fahrzeugsitz (1), umfassend ein Strukturteil (3), welches ein Schlossanbindungsblech (60) aufweist, und eine an dem Schlossanbindungsblech (60) befestigte Verriegelungseinheit (10), wobei die Verriegelungseinheit (10) mindestens einen Lagerbolzen (51) mit einer Durchgangsöffnung (55) aufweist,
**dadurch gekennzeichnet, dass**
das Schlossanbindungsblech (60) mindestens eine Gegenkontur (62) aufweist, welche in die Durchgangsöffnung (55) des mindestens einen Lagerbolzens (51) hinein ragt, und die Gegenkontur (62) hohlzylindrisch ausgebildet ist.

2. Fahrzeugsitz (1) nach Anspruch 1, **dadurch gekennzeichnet, dass** die Durchgangsöffnung (55) einen ersten axialen Abschnitt (A1) mit einem ersten Innendurchmesser (D1) und einen zweiten axialen Abschnitt (A2) mit einem zweiten Innendurchmesser (D2) aufweist, wobei der zweite Innendurchmesser (D2) größer ist als der erste Innendurchmesser (D1).

3. Fahrzeugsitz (1) nach Anspruch 2, **dadurch gekennzeichnet, dass** der zweite axialen Abschnitt (A2) dem Schlossanbindungsblech (60) zugewandt ist.

4. Fahrzeugsitz (1) nach Anspruch 3, **dadurch gekennzeichnet, dass** der äußere Durchmesser der Gegenkontur (62) dem zweiten Innendurchmesser (D2) entspricht.

5. Fahrzeugsitz (1) nach einem der Ansprüche 3 bis 4, **dadurch gekennzeichnet, dass** die Länge der Gegenkontur (62) in axialer Richtung der Länge des zweiten axialen Abschnitts (A2) entspricht.

6. Fahrzeugsitz (1) nach einem der Ansprüche 3 bis 5, **dadurch gekennzeichnet, dass** der innere Durchmesser der Gegenkontur (62) dem ersten Innendurchmesser (D1) entspricht.

7. Fahrzeugsitz (1) nach einem der vorstehenden Ansprüche, **dadurch gekennzeichnet, dass** die Gegenkontur (62) als Kragenzug ausgebildet ist.

8. Fahrzeugsitz (1) nach einem der vorstehenden Ansprüche, **dadurch gekennzeichnet, dass** die Durchgangsöffnung (55) von einem Befestigungsmittel (65) durchragt wird.

9. Fahrzeugsitz (1) nach Anspruch 8, **dadurch gekennzeichnet, dass** das Befestigungsmittel (65) als Schraube (65) mit einem Kopf (66) und einem Schaft (67) ausgebildet ist.

10. Fahrzeugsitz (1) nach Anspruch 9, **dadurch gekennzeichnet, dass** die Gegenkontur (62) ein Innengewinde aufweist, in welches die Schraube (65) eingeschraubt ist.

11. Fahrzeugsitz (1) nach Anspruch 9, **dadurch gekennzeichnet, dass** auf der der Verriegelungseinheit (10) abgewandten Seite des Schlossanbindungsblechs (60) eine Mutter (64) vorgesehen ist, in welche die Schraube (65) eingeschraubt ist.

12. Fahrzeugsitz (1) nach Anspruch 8, **dadurch gekennzeichnet, dass** das Befestigungsmittel (65) als Niet ausgebildet ist.

13. Fahrzeugsitz (1) nach einem der vorstehenden Ansprüche, **dadurch gekennzeichnet, dass** das Strukturteil (3) des Fahrzeugsitzes (1) eine Rückenlehne (3) ist.

14. Fahrzeugsitz (1) nach einem der vorstehenden Ansprüche, **dadurch gekennzeichnet, dass** auf dem Lagerbolzen (51) eine Drehfalle (20) schwenkbar gelagert ist.

15. Fahrzeugsitz (1) nach einem der vorstehenden Ansprüche, **dadurch gekennzeichnet, dass** die Verrieglungseinheit (10) mindestens einen weiteren Lagerbolzen (52) aufweist, auf welchem mindestens ein Sicherungselement (30, 40) schwenkbar gelagert ist.

## Claims

1. Vehicle seat (1) comprising a structural part (3) which has a lock connection plate (60) and a locking unit (10) which is fixed to the lock connection plate (60), wherein the locking unit (10) has at least one bearing bolt (51) with a through-opening (55),
**characterized in that**
the lock connection plate (60) comprises at least one mating contour (62) which projects into the through-opening (55) of the at least one bearing bolt (51), and the mating contour (62) is of hollow cylindrical configuration.

2. Vehicle seat (1) according to Claim 1, **characterized in that** the through-opening (55) has a first axial portion (A1) with a first internal diameter (D1) and a second axial portion (A2) with a second internal diameter (D2), wherein the second internal diameter (D2) is larger than the first internal diameter (D1).

3. Vehicle seat (1) according to Claim 2, **characterized in that** the second axial portion (A2) faces the lock connection plate (60).

4. Vehicle seat (1) according to Claim 3, **characterized in that** the external diameter of the mating contour (62) corresponds to the second internal diameter (D2).

5. Vehicle seat (1) according to one of Claims 3 to 4, **characterized in that** the length of the mating contour (62) in the axial direction corresponds to the length of the second axial portion (A2).

6. Vehicle seat (1) according to one of Claims 3 to 5, **characterized in that** the internal diameter of the mating contour (62) corresponds to the first internal diameter (D1).

7. Vehicle seat (1) according to one of the preceding Claims, **characterized in that** the mating contour (62) is configured as a collar.

8. Vehicle seat (1) according to one of the preceding claims, **characterized in that** the through-opening (55) is penetrated by a fastening means (65).

9. Vehicle seat (1) according to Claim 8, **characterized in that** the fastening means (65) is configured as a screw (65) with a head (66) and a shank (67).

10. Vehicle seat (1) according to Claim 9, **characterized in that** the mating contour (62) has an internal thread, the screw (65) being screwed therein.

11. Vehicle seat (1) according to Claim 9, **characterized in that** a nut (64) is provided on the side of the lock connection plate (60) remote from the locking unit (10), the screw (65) being screwed therein.

12. Vehicle seat (1) according to Claim 8, **characterized in that** the fastening means (65) is configured as a rivet.

13. Vehicle seat (1) according to one of the preceding claims, **characterized in that** the structural part (3) of the vehicle seat (1) is a backrest (3).

14. Vehicle seat (1) according to one of the preceding claims, **characterized in that** a rotary latch (20) is pivotably mounted on the bearing bolt (51).

15. Vehicle seat (1) according to one of the preceding claims, **characterized in that** the locking unit (10) has at least one further bearing bolt (52), at least one securing element (30, 40) being pivotably mounted thereon.

## Revendications

1. Siège de véhicule (1), comprenant une partie de structure (3), laquelle comporte une tôle de liaison de serrure (60) et une unité de verrouillage (10) fixée sur la tôle de liaison de serrure (60), l'unité de verrouillage (10) comportant au moins un tourillon (51) avec une ouverture de passage (55),
**caractérisé en ce que**
la tôle de liaison de serrure (60) comporte au moins un contre-profil (62), lequel pénètre dans l'ouverture de passage (55) d'au moins un tourillon (51) et le contre-profil (62) est constitué de façon cylindrique creuse.

2. Siège de véhicule (1) selon la revendication 1, **caractérisé en ce que** l'ouverture de passage (55) comporte une première section axiale (A1) avec un premier diamètre intérieur (D1) et une deuxième section axiale (A2) avec un deuxième diamètre intérieur (D2), le deuxième diamètre intérieur (D2) étant plus grand que le premier diamètre intérieur (D1).

3. Siège de véhicule (1) selon la revendication 2, **caractérisé en ce que** la deuxième section axiale (A2) est tournée vers la tôle de liaison de serrure (60).

4. Siège de véhicule (1) selon la revendication 3, **caractérisé en ce que** le diamètre extérieur du contre-profil (62) correspond au deuxième diamètre intérieur (D2).

5. Siège de véhicule (1) selon l'une quelconque des revendications 3 à 4, **caractérisé en ce que** la longueur du contre-profil (62) correspond en direction axiale à la longueur de la deuxième section axiale (A2).

6. Siège de véhicule (1) selon l'une quelconque des revendications 3 à 5, **caractérisé en ce que** le diamètre intérieur du contre-profil (62) correspond au premier diamètre intérieur (D1).

7. Siège de véhicule (1) selon l'une quelconque des revendications précédentes, **caractérisé en ce que** le contre-profil (62) est constitué sous la forme d'une collerette.

8. Siège de véhicule (1) selon l'une quelconque des revendications précédentes, **caractérisé en ce que** l'ouverture de passage (55) est traversé par un moyen de fixation (65).

9. Siège de véhicule (1) selon la revendication 8, **caractérisé en ce que** le moyen de fixation (65) est constitué sous la forme d'une vis (65) avec une tête (66) et une tige (67).

10. Siège de véhicule (1) selon la revendication 9, **caractérisé en ce que** le contre-profil (62) comporte un filetage intérieur dans lequel est vissée la vis (65).

11. Siège de véhicule (1) selon la revendication 9, **caractérisé en ce que** sur le côté opposé à l'unité de verrouillage (10) de la tôle de liaison de serrure (60) un écrou (64) est prévu dans lequel est vissée la vis (65).

12. Siège de véhicule (1) selon la revendication 8, **caractérisé en ce que** le moyen de fixation (65) est constitué sous la forme d'un rivet.

13. Siège de véhicule (1) selon l'une quelconque des revendications précédentes, **caractérisé en ce que** la partie de structure (3) du siège de véhicule (1) est un dossier (3).

14. Siège de véhicule (1) selon l'une quelconque des revendications précédentes, **caractérisé en ce qu'**un loquet tournant (20) est logé pouvant pivoter sur le tourillon (51).

15. Siège de véhicule (1) selon l'une quelconque des revendications précédentes, **caractérisé en ce que** l'unité de verrouillage (10) comporte au moins un autre tourillon (52) sur lequel est logé pouvant pivoter au moins un élément de sécurité (30, 40).
